# FASCICULE DE BREVET EUROPEEN

(11) **EP 0 728 602 B1**
(45) Date de publication et mention de la délivrance du brevet: **02.05.2001**
(21) Numéro de dépôt: 96400325.5
(22) Date de dépôt: 16.02.1996
(51) Int. Cl.: B60G 15/07, F16F 1/12

(54) **Dispositif de suspension du type Mac Pherson pour véhicule**
Vorrichtung für eine Mac Pherson-Typ-Fahrzeugaufhängung
Device for MacPherson-type vehicle suspension

(30) Priorité: 17.02.1995 FR 9501838
(43) Date de publication de la demande: 28.08.1996
(73) Titulaire: ALLEVARD, F-92210 Saint-Cloud (FR)
(72) Inventeur: Hastey, Jean-Paul F., F-59500 Douai (FR)
(74) Mandataire: Busnel, Jean-Benoît

(56) Documents cités:
- EP-A- 0 292 371
- EP-A- 0 319 651
- DE-A- 3 743 451
- DE-A- 4 110 471
- DE-A- 4 126 501
- DE-A- 4 339 820
- FR-A- 2 540 586
- FR-A- 2 600 595
- FR-A- 2 641 741
- FR-A- 2 644 735

## Description

La présente invention concerne un dispositif de suspension du type Mac Pherson pour véhicule.

Les dispositifs de suspension de ce type comprennent généralement un amortisseur dont la partie inférieure est raccordée d'une part, à une roue et, d'autre part, à un bras de suspension fixé au châssis du véhicule et dont la partie supérieure est engagée à l'intérieur d'un ressort hélicoïdal d'axe central. Le ressort hélicoïdal prend appui dans le bas sur une coupelle inférieure solidaire de l'amortisseur et dans le haut sur une coupelle supérieure fixée à la caisse du véhicule.

Trois forces principales sollicitent une telle suspension ; il s'agit de l'effort à la roue, de l'effort du bras de suspension et de l'effort de la caisse retransmis par l'appui du ressort sur les coupelles.

Pour que cette suspension soit en équilibre, il est nécessaire que ces trois forces soient concourantes.

Or, la plupart du temps cette condition n'est pas satisfaite du fait que la résultante des efforts d'appui du ressort s'exerce parallèlement à son axe central et sans rencontrer l'intersection des autres directions des autres forces.

Par suite, des efforts compensateurs se produisent au niveau de l'amortisseur (palier de tige, piston..) pour rétablir cet équilibre indispensable.

Mais ces efforts sont néfastes car ils provoquent une usure prématurée du palier de l'amortisseur et des frottements solides qui dégradent le confort de l'habitacle.

Une solution pourrait consister à modifier la direction de l'effort de la caisse en changeant l'orientation du ressort et en l'inclinant par rapport à l'axe de l'amortisseur. Mais l'espace disponible sur le véhicule entre la roue et la coupelle d'appui inférieur pour une telle disposition notablement plus encombrante n'est pas toujours suffisant.

De ce fait, la recherche de l'équilibre reste très difficile.

Afin de pallier cet inconvénient le brevet allemand DE-A-37 43 451 propose un dispositif de suspension du type Mac Pherson selon le préambule de la revendication 1 dans lequel la résultante des efforts d'appui dudit ressort sur les coupelles inférieure et supérieure présente une inclinaison par rapport à son axe central de telle sorte que ladite résultante soit orientée selon une direction concourante avec l'effort à la roue et l'effort du bras de suspension.

Toutefois, cette inclinaison de la résultante des efforts d'appui du ressort est obtenue par une variation de la section du fil constituant le ressort, ce qui nécessite une réalisation et une fabrication particulière de ce dernier.

Il est également connu, du brevet allemand DE 41 10 471, un dispositif de suspension du type Mac Pherson dans lequel la direction de la résultante des efforts d'appui du ressort sur les coupelles inférieure et supérieure est inclinée par rapport à l'axe du ressort, lui-même incliné par rapport à l'axe de l'amortisseur.

Ainsi, l'inclinaison de l'axe du ressort par rapport à l'axe de l'amortisseur présente l'inconvénient, déjà décrit ci-dessus, que l'espace disponible pour une telle disposition n'est pas toujours suffisant.

Le brevet français no. 83 01 971 concerne également un dispositif de suspension du type Mac Pherson dans lequel les contacts d'appui entre les coupelles inférieure et supérieure et le ressort sont diamétralement opposés d'une spire d'extrémité à l'autre, chaque spire d'extrémité étant, en outre, inclinée par rapport à l'une des coupelles au niveau de leur point de contact respectif.

Toutefois, cette solution bien qu'avantageuse, ne permet pas d'assurer un contact ponctuel parfait entre les extrémités libres du ressort et les coupelles. En effet, lorsque le ressort travail en compression, il est à craindre qu'une portion non négligeable des spires d'extrémité vienne en contact direct avec les coupelles, ce qui aurait pour résultat de confondre la ligne d'action du ressort avec son axe géométrique et donc l'axe de l'amortisseur.

L'invention a pour but de résoudre les problèmes techniques précédents.

Ce but est atteint, selon l'invention, au moyen d'un dispositif de suspension du type Mac Pherson pour véhicule comprenant un amortisseur dont la partie inférieure est raccordée d'une part, à une roue et, d'autre part, à un bras de suspension fixé au châssis du véhicule et dont la partie supérieure est engagée à l'intérieur d'un ressort hélicoïdal d'axe central prenant appui dans le bas sur une coupelle inférieure solidaire de l'amortisseur et dans le haut sur une coupelle supérieure fixée à la caisse du véhicule, de telle sorte que la résultante des efforts d'appui dudit ressort sur les coupelles inférieure et supérieure présente une inclinaison α par rapport à son axe central pour qu'elle soit orientée selon une direction concourante avec l'effort à la roue et l'effort du bras de suspension, caractérisé en ce que le pas des spires d'extrémité du ressort est négatif sur un tronçon correspondant à un secteur angulaire allant de 45° à 90° à partir de leur extrémité libre et correspond, de préférence, à une pente d'angle non nul inférieur à 15° de façon que les contacts d'appui entre les coupelles inférieure et supérieure et les spires d'extrémité respectives du ressort soient ponctuels, et ne correspondent pas aux extrémités libres du ressort.

Selon une première variante de réalisation, ledit amortisseur et ledit ressort sont disposés de façon coaxiale.

Selon une autre caractéristique, les contacts d'appui entre les coupelles inférieure et supérieur et le ressort sont diamétralement opposés d'une spire d'extrémité à l'autre.

L'inclinaison α de la direction de la résultante des efforts d'appui du ressort par rapport à son axe central est comprise entre 8° et 16°. Selon une autre variante, il est prévu que les faces d'appui des coupelles en contact avec les spires d'extrémité du ressort sont planes.

Selon encore une autre variante, la coupelle d'appui supérieure est fixée à la caisse du véhicule par le biais de roulements à bille.

L'invention permet d'obtenir un effort d'appui du ressort et donc un effort de la caisse qui est incliné par rapport à l'axe central dudit ressort. Cette disposition permet d'assurer l'équilibre de la suspension Mac Pherson sans modifier la position ni l'orientation du ressort.

En outre, l'encombrement de la suspension de l'invention est plus faible car il n'est pas nécessaire que le ressort soit incliné par rapport à l'axe de l'amortisseur.

Par ailleurs, la masse du ressort est optimisée car le nombre de spires inactives est réduit par rapport aux ressorts traditionnels.

L'invention sera mieux comprise à la lecture de la description qui va suivre, accompagnée des dessins sur lesquels :
- la figure 1 représente une vue schématique d'une suspension du type Mac Pherson selon l'invention ;
- les figures 2a et 2b sont respectivement une vue en élévation et une vue de dessus du ressort utilisé dans la suspension de l'invention ; et,
- la figure 3 est une vue de détail en développée du ressort des figures 2a et 2b.

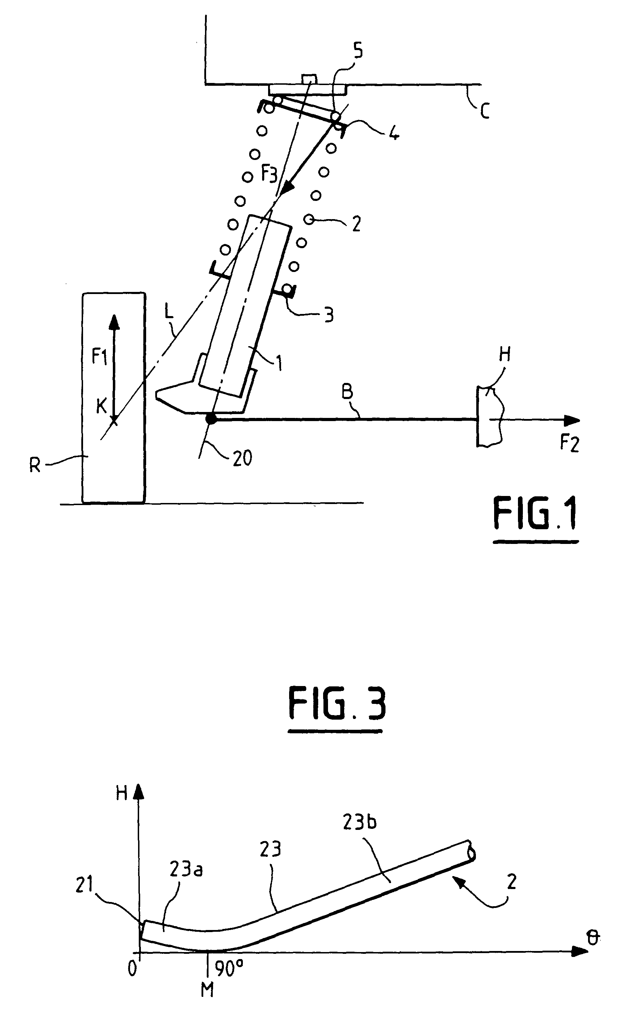

Le dispositif de suspension pour véhicule représenté sur la figure 1 est du type Mac Pherson.

Il comprend un amortisseur 1 raccordé de manière traditionnelle par sa partie inférieure d'une part à une roue R et, d'autre part, à un bras de suspension B fixé au châssis H du véhicule.

L'amortisseur 1 coopère avec un ressort hélicoïdal 2 d'axe central 20.

A cet effet, la partie supérieure de l'amortisseur 1 est engagée par le bas à l'intérieur du ressort 2.

Le ressort 2 est monté entre la caisse C du véhicule et l'amortisseur 1 en prenant appui dans le bas sur une coupelle inférieure 3 solidaire de l'amortisseur 1 et dans le haut sur une coupelle supérieure 4 fixée à la caisse C par le biais de roulements 5. L'amortisseur 1 a une forme sensiblement cylindrique qui passe au travers de la coupelle inférieure 3.

L'équilibre de la suspension est assuré lorsque les trois forces mécaniques F1,F2,F3 traduisant respectivement les efforts s'exerçant sur la roue R, sur le bras de suspension B et sur la caisse C ont des directions concourantes. Les forces F1 et F2 relatives aux efforts de la roue R et du bras B sont généralement orthogonales ou tout au moins concourantes au centre de gravité K de la roue R.

En revanche, la force F3 relative à l'effort exercé par la caisse C est retransmis par le ressort 2, sous forme d'efforts d'appui, sur les coupelles inférieure 3 et supérieure 4.

Or, la résultante des efforts d'appui du ressort 2 est généralement orientée selon l'axe central 20.

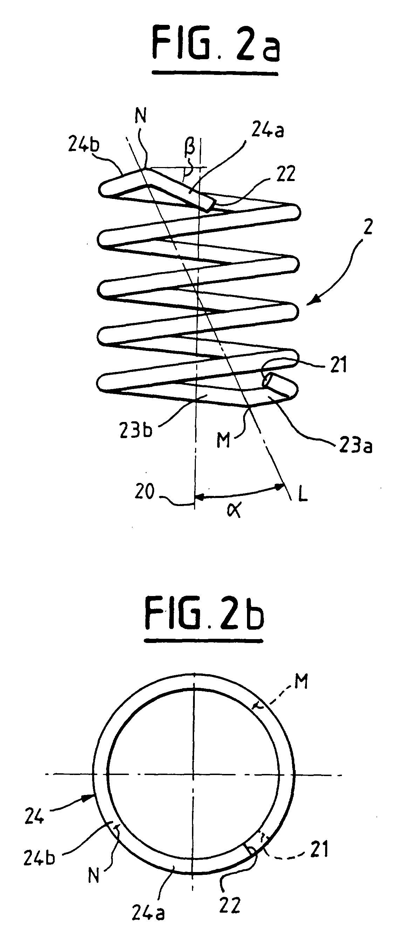

Selon l'invention, l'équilibre du dispositif suspension est obtenu en réalisant le ressort 2 de telle sorte que la résultante des efforts d'appui sur les coupelles inférieure 3 et supérieure 4 présente une inclinaison d'angle α compris entre 8° et 16° par rapport à l'axe central 20 comme représenté sur les figures 2a et 2b.

Dans ces conditions, l'orientation de la force F3 relative à l'effort exercée sur la caisse C peut être réglée de façon à être concourante avec la direction des autres forces F1, F2 au niveau du centre de gravité K de la roue R sans qu'il soit nécessaire de changer la position du ressort 2.

Ainsi, le ressort 2 et l'amortisseur 1 peuvent ils être disposés de façon coaxiale selon l'axe central 20 comme représenté sur la figure 1, ce qui correspond à un encombrement minimum.

La figure 3 représente une vue développée de la spire d'extrémité inférieure 23 du ressort 2.

En abscisse se trouve l'angle θ pris à partir du rayon passant par l'extrémité libre 21 et en ordonnée se trouve la hauteur prise sur l'axe central 20 à partir du point le plus bas du ressort 2.

Le pas de la spire 23 est négatif sur un premier tronçon 23a correspondant à un secteur angulaire allant de 45° à 90° pris dans le plan horizontal à partir de l'extrémité libre 21. Sur la figure 3, ce secteur est de 90°. De préférence, ce pas correspond à une pente d'angle β compris entre 0° et 15° à partir de l'horizontal (sans être nul). Il peut être différent pour les deux spires d'extrémité 23, 24. L'extrémité libre 21 ne correspond donc pas au point le plus bas du ressort 2. Le pas est ensuite positif pour le tronçon adjacent complémentaire 23b de la spire d'extrémité 23 et pour les autres spires. Mais on retrouve une configuration symétrique pour la spire d'extrémité supérieure 24 dont l'extrémité libre 22 ne constitue pas le point le plus haut du ressort 2.

Par ailleurs, les faces d'appui des coupelles inférieure 3 et supérieure 4 sont planes.

Il en résulte que les contacts d'appui entre les coupelles inférieure 3 et supérieure 4 et les spires d'extrémité respectives 23, 24 sont ponctuels et, de préférence, diamétralement opposés d'une spire d'extrémité à l'autre.

La position des zones de contact inférieur M et supérieur N est représentée sur les figures 2a et 2b.

La ligne d'action L correspondant à la direction de l'effort de la caisse ou à la résultante des forces d'appui F3 passe donc par les points M et N et est inclinée d'un angle α par rapport à l'axe central 20.

## Revendications

1. Dispositif de suspension du type Mac Pherson pour véhicule comprenant un amortisseur (1) dont la partie inférieure est raccordée d'une part, à une roue (R) et, d'autre part, à un bras de suspension (B) fixé au châssis (H) du véhicule et dont la partie supérieure est engagée à l'intérieur d'un ressort hélicoïdal (2) d'axe central (20) prenant appui dans le bas sur une coupelle inférieure (3) solidaire de l'amortisseur (1) et dans le haut sur une coupelle supérieure (4) fixée à la caisse (C) du véhicule, de telle sorte que la résultante (F3) des efforts d'appui dudit ressort (2) sur les coupelles inférieure (3) et supérieure (4) présente une inclinaison (α) par rapport à son axe central (20) pour qu'elle soit orientée selon une direction concourante avec l'effort à la roue (F1) et l'effort (F2) du bras de suspension,
caractérisé en ce que le pas des spires d'extrémité (23, 24) du ressort (2) est négatif sur un tronçon (23, 24a) correspondant à un secteur angulaire allant de 45° à 90° à partir de leur extrémité libre (21, 22) et correspond de préférence à une pente d'angle (β) non nul inférieur à 15°, de façon que les contacts d'appui (M, N) entre les coupelles inférieure (3) et supérieure (4) et les spires d'extrémités respectives (23, 24) du ressort (2) soient ponctuels, et ne correspondent pas aux extrémités libres du ressort.

2. Dispositif selon la revendication 1, caractérisé en ce que ledit amortisseur (1) et ledit ressort (2) sont disposés de façon coaxiale.

3. Dispositif selon l'une des revendications précédentes, caractérisé en ce que les contacts d'appui (M, N) entre les coupelles inférieure (3) et supérieur (4) et le ressort (2) sont diamétralement opposés d'une spire d'extrémité (23) à l'autre (24).

4. Dispositif selon l'une des revendications précédentes, caractérisé en ce que l'inclinaison (α) de la direction de la résultante (F3) des efforts d'appui du ressort (2) par rapport à son axe central (20) est comprise entre 8° et 16°.

5. Dispositif selon l'une des revendications précédentes, caractérisé en ce que les faces d'appui des coupelles (3, 4) en contact avec les spires d'extrémité (23, 24) du ressort (2) sont planes.

6. Dispositif selon l'une des revendications précédentes, caractérisé en ce que la coupelle d'appui supérieure (4) est fixée à la caisse (C) du véhicule par le biais de roulements à bille (5).

## Patentansprüche

1. McPherson-Aufhängungsvorrichtung für Fahrzeuge, die einen Stoßdämpfer (1) aufweist, dessen unterer Teil einerseits mit einem Rad (R) und andererseits mit einem am Fahrzeugchassis (H) befestigten Aufhängungsarm (B) verbunden ist und dessen oberer Teil in das Innere einer Schraubenfeder (2) mit zentraler Achse (20) eingesteckt ist, die unten auf einem mit dem Stoßdämpfer (1) verbundenen unteren Teller (3) und oben auf einem an der Fahrzeugkarosserie (C) befestigten oberen Teller (4) aufliegt, so dass die Resultierende (F3) der Auflagekräfte der Feder (2) auf dem unteren Teller (3) und auf dem oberen Teller (4) eine solche Neigung (α) gegen ihre zentrale Achse (20) hat, dass sie in einer Richtung gerichtet ist, die sich mit der Kraft (F1) auf das Rad und mit der Kraft (F2) des Aufhängungsarms in einem Punkt schneidet,
dadurch gekennzeichnet, dass die Steigung der Endwindungen (23, 24) der Feder (2) auf einem Teilstück (23, 24a), das von ihrem freien Ende (21, 22) an einem Winkelsektor von 45° bis 90° entspricht, negativ ist und vorzugsweise einer Neigung mit einem Winkel (β) von nicht null und unter 15° entspricht, so dass die Auflagekontakte (M, N) zwischen dem oberen Teller (3) und dem unteren Teller (4) und der entsprechenden Endwindung (23, 24) punktförmig sind und nicht den freien Enden der Feder entsprechen.

2. Vorrichtung nach Anspruch 1, dadurch gekennzeichnet, dass der Stoßdämpfer (1) und die Feder (2) koaxial angeordnet sind.

3. Vorrichtung nach einem der vorhergehenden Ansprüche, dadurch gekennzeichnet, dass die Auflagekontakte (M, N) zwischen dem unteren Teller (3) und dem oberen Teller (4) und der Feder (2) von einer Endwindung (23) zur anderen (24) diametral entgegengesetzt sind.

4. Vorrichtung nach einem der vorhergehenden Ansprüche, dadurch gekennzeichnet, dass die Neigung (α) der Richtung der Resultierenden (F3) der Auflagekräfte der Feder (2) gegen ihre zentrale Achse (20) zwischen 8° und 16° beträgt.

5. Vorrichtung nach einem der vorhergehenden Ansprüche, dadurch gekennzeichnet, dass die Auflageflächen der Teller (3, 4), die mit den Endwindungen (23, 24) der Feder (2) in Kontakt sind, eben sind.

6. Vorrichtung nach einem der vorhergehenden Ansprüche, dadurch gekennzeichnet, dass der obere Auflageteller (4) an der Fahrzeugkarosserie (C) über Kugellager (5) befestigt ist.

## Claims

1. MacPherson-type suspension arrangement for vehicle, comprising a shock absorber (1), the lower part of which is connected, on the one hand, to a wheel (R) and, on the other hand, to a suspension arm (B) fixed to the frame (H) of the vehicle and the upper part of which is engaged in the interior of a helical spring (2) having a central axis (20) bearing at the bottom against a lower cup (3) integral with the shock-absorber (1) and at the top against an upper cup (4) fixed to the body (C) of the vehicle, in such a manner that the resultant (F3) of the supporting forces of the said spring (2) on the lower (3) and upper cups (4) has an inclination (α) relative to its central axis (20) such that it is oriented in a concurrent direction with the wheel force (F1) and the suspension arm force (F2), characterised in that the end turns (23, 24) of the spring (2) have a reverse pitch over a portion (23, 24a) corresponding to an angular sector of from 45° to 90° from their free ends (21, 22) which preferably corresponds to a non-zero slope (β) of less than 15°, such that the suppon contacts (M, N) between the lower (3) and upper cups (4) and the respective end turns (23, 24) of the spring (2) are point contacts and do not correspond to the free ends of the spring.

2. Arrangement according to claim 1, characterised in that the said shock-absorber (1) and the said spring (2) are disposed coaxially.

3. Arrangement according to one of the preceding claims, characterised in that the support contacts (M, N) between the lower (3) and upper cups (4) and the spring (2) are diametrically opposite from one end turn (23) to the next (24).

4. Arrangement according to one of the preceding claims, characterised in that the inclination (α) of the direction of the resultant (F3) of the supporting forces of the spring (2) relative to its central axis (20) is between 8° and 16°.

5. Arrangement according to one of the preceding claims, characterised in that the bearing faces of the cups (3, 4) in contact with the end turns (23, 24) of the spring (2) are plane.

6. Arrangement according to one of the preceding claims, characterised in that the upper retainer (4) is fixed to the body (C) of the vehicle by the bias of ball bearings (5).
